# EUROPEAN PATENT APPLICATION

(11) **EP 4 793 255 A1**
(43) Date of publication of application: **19.08.2026**
(21) Application number: 25382144.1
(22) Date of filing: 18.02.2025
(51) Int. Cl.: C04B 28/04, C04B 28/10, C04B 111/80

(54) **A CEMENTITIOUS COMPOSITE WITH THERMOELECTRIC AND RADIATIVE COOLING PROPERTIES**

(71) Applicant: Universidad Pública De Navarra, 31006 Pamplona (ES); Consejo Superior De Investigaciones Científicas - CSIC, 28006 Madrid (ES); Universidad del País Vasco/Euskal Herriko Unibertsitatea, 48940 Leioa, Vizcaya (ES)
(72) Inventor: SÁNCHEZ DOLADO, Jorge, 20018 San Sebastián (ES); GORACCI, Guido, 20018 San Sebastián (ES); MOHAMAD, Barzegar, 20018 San Sebastián (ES); GHIZLANE, Moutaukil, 20018 San Sebastián (ES); BERUETE, Miguel, 31006 Pamplona (ES); TORRES GARCÍA, Alicia Elena, 31006 Pamplona (ES)
(74) Representative: Cueto, Sénida

(57) **Abstract**

The present invention refers to a cementitious composite characterized in that it exhibits thermoelectricity and radiative cooling properties, such that the Seebeck coefficient is >2000 µV/K and the solar reflectance is above 0.95, both values included, particularly, the cementitious composite comprises zeolite selected among Z4A, ZSM.5, MCM-21, MCM-22 and mixtures of them, preferably in a high proportion over 60% by weight.

## Description

### FIELD OF THE INVENTION

The present invention is encompassed within the field of building materials, particularly materials intended for energy saving and harvesting.

### STATE OF THE ART

Concrete is a widely used material that presents vast opportunities for energy harvesting applications. Among these, thermoelectric concrete shows promising potential for harvesting waste heat generated in urban and industrial environments.

However, the thermoelectric (TE) characteristics of plain ordinary Portland cement (OPC) are relatively inadequate, featuring a Seebeck coefficient of roughly 2 µV/k [S. Wen, D.D.L. Chung, Seebeck effect in carbon fiber-reinforced cement, Cement and Concrete Research Volume 29, Issue 12, December 1999, 1989-1993.]. Alkali-activated materials, including geopolymers, exhibit greater ionic conductivity than OPCs owing to their zeolitic structure. Despite the potential of geopolymers as smart materials, their thermoelectric properties still remain poor. Indeed, the study of Cai et al. [J. Cai, J. Tan, X. Li, Thermoelectric behaviors of fly ash and metakaolin based geopolymer, Constr. Build. Mater. 237 (2020), https://doi.org/10.1016/j. conbuildmat.2019.117757.] investigated the thermoelectric characteristics of geopolymers produced from fly ash and metakaolin, revealing Seebeck coefficients of about 15.12 µV/k and about 6.31 µV/k, respectively.

The primary strategy for improving the TE properties of cement-based materials has involved the use of functional additives. In the state of the art, three types of ingredients have been added into concrete in order to increase the TE properties of cement-based materials: (i) Carbon based additions, (ii) steel fibers, and (iii) metallic oxides.

The carbon-based additions have comprised carbon fibers (CF), carbon nanotubes (CNT) and graphite and graphene-based materials. In spite that numerous works have been published in this area (see for instance the reported Seebeck coefficients typically lye between 5-60 µV/K, except for the highest value (127 µV/K) found by Bahar and Salih with CFs.

The addition of short steel fibers induces negative or positive Seebeck coefficients depending on the amount employed. At low dosages (below volume fractions of 0.27%) the Seebeck coefficient can reach values close to -63±5 mV/K whereas at high dosages (above volume fractions of 0.27%) it goes to +31±3 µV/K.

Up to now, the most promising results have been obtained with metallic oxides. Different metallic oxides like Bi₂O₃, MnO₂, Fe₂O₃, ZnO have been proved (see [X. Liu et al.; Construction and Building Materials 304 (2021) 124636; Singh et al. Materials Today Energy 21 (2021) 1000714]), giving Seebeck coefficients than can exceed 1000 µV/K. So far, the highest Seebeck coefficients have been reported in [T. Ji, X. Zhang, W. Li; Enhanced thermoelectric effect of cement composite by addition of metallic oxide nanopowders for energy harvesting in buildings; Constr. Build. Mater., 115 (2016), pp. 576-581], where nanostructured ZnO and Fe₂O₃ powder were incorporated in cement composites at low dosages (weight fractions of oxides below 5%). Values as high as 3200 µV/K were found.

In this scenario, the present invention proposes zeolites as a new type of materials for enhancing the Seeebeck coefficient of cement-based materials. Zeolites form a family of several microporous, crystalline aluminosilicate materials commonly used as commercial adsorbents and catalysts. Distorted Zeolite-like structures are naturally formed in geopolymers and or alkali activated concretes. Indeed, several authors [Barzegar et al. Construction and Building Materials 411 (2024) 134398] have already pointed that geopolymer matrices could be more appropriate for enhancing the ionic component of the Seebeck coefficient.

It is worth mentioning, that the use of Zeolites for producing eco-friendly concrete has been already proposed [ see D. Vaiciukniené et al. Production of an eco-friendly concrete by including high volume zeolitic supplementary cementitious materials and quicklime; Scientific reports (2024) 14:188 and references therein]. The zeolites were used as supplementary cementitious materials (SCMs) replacing the OPC in amounts never above 50-60% by weight, and always in combination of chemical admixtures (Na₂SO₄, CaCl₂, NaCl) or hydrated lime (Ca(OH)₂) or quicklime (CaO) for increasing the rate of the pozzolanic reactions.

According to the present invention much higher amounts of zeolites are used compared to the state of the art and could be viewed_as a modern Roman-inspired mortar. In Roman concretes, Quicklime (CaO) coming from calcining limestone, was pre-hydrated with water (a process known as slaking) or mixed directly with pozzolans and sand (a process known as hot-mixing). The ratio between the pozzolans and the CaO was something between 2 and 3 (by weight).

According to the present invention, zeolites (pozzolans with microporous crystalline structures) instead of the volcanic ashes (pozzolans with vesicular glassy structures) are used. Besides, certain activators or minor contents of SCMs or OPCs can be added to increase the zeolitic pozzolanic reaction.

Due to their modest pozzolanic reactivity, the overall structure of these cementitious composites will maintain a large content of undefected zeolites trapped in a solid skeleton (Figure 1). Interestingly, the presence of zeolitic cavities enables a better ionic transport conductivity and overall a much higher Seebeck coefficient (see Figure 4 and 5).

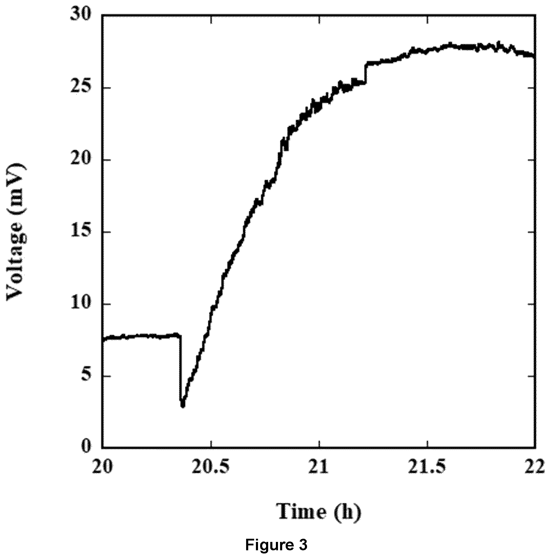

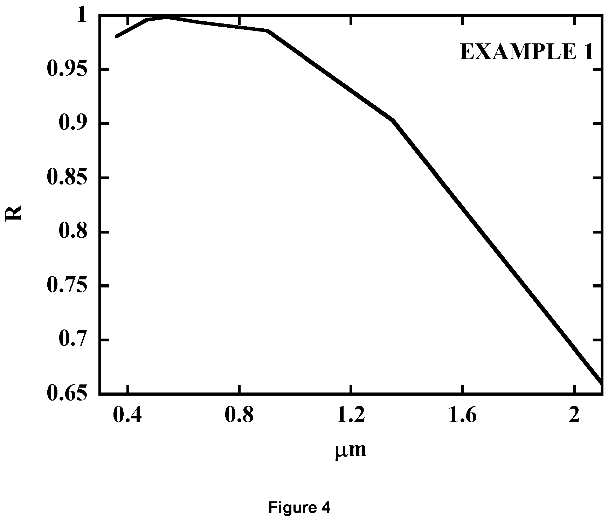

Likewise, the intricated microstructure of the cementitious composite of the present invention enables ultra high solar reflectances (Figures 3 and 4 and Table 1). In that sense, some of the cases give reflectances above 0.95, competing with the best radiative coolers of the state of the art. Values close or above 0.95 are recognized to yield sub-ambient daytime radiative cooling [J. Mandal et al. Joule 4, (2020) 1350-1356].

### DESCRIPTION OF THE INVENTION

The present invention refers to a cementitious composite that concurrently exhibits thermoelectricity and radiative_cooling properties.

The term "composite" according to the present invention refers to the material resulting from the hydraulic reaction of lime and zeolitic puzzolans. It can be understood as synonym of "matrix" or cement paste. Cement paste is a precursor of materials as mortars, grouts or concretes. This hydraulic reaction means that water intervenes in the reaction, and the ratio liquid/solid in the hydraulic reaction can range from 0.1 to 1, and more particularly, between 0,2 and 0,6.

More particularly, the invention refers to a cementitious composite characterized in that it exhibits thermoelectricity and radiative cooling properties, such that the Seebeck coefficient is >2000 µV/K and the solar reflectance is above 0.95, both values included.

The cementitious composite comprises one or more zeolites. The zeolite can be Z4A, ZSM.5, MCM-21, MCM-22 or and mixtures thereof.

The zeolite can be present in a weight percent between 60 % and 90 %, preferably, between 65 % and 75%, and more preferably, between 68 % and 72%, with regard to the total composite weight, these values included.

The cementitious composite also comprises lime.

The lime can be selected from slaked lime, quicklime and a combination thereof,
The lime can be present in the composite in a weight percent between 10% and 40 %, preferably, between 25% and 35%, particularly between 28% and 32%, with regard to the total composite weight, these values included.

The cementitious composite can comprise a binder.

The binder can be selected from a SCM, an OPC and any combination thereof.

The SCM binder is selected from volcanic ash, fly ash, granulated blast furnace slag, silica, metakaolin and any combination thereof.

Optionally, the zeolite can be replaced with the binder. The proportion of zeolite that can be replaced with the binder is 50 % by weight of zeolite, or below 50 % of zeolite by weigh, preferably below 40%. According to additional particular embodiments, the proportion of zeolite that can be replaced with the binder is below 30 % by weight. According to additional particular embodiments, the proportion of zeolite that can be replaced with the binder is below 20 % by weight of zeolite.

According to particular embodiments, the cementitious composite comprises a zeolite-based lime mortar and SCM or OPCs.

A based lime mortar in the present specification refers to a mortar comprising lime and zeolite.

According to particular embodiments, the cementitious composite comprises:
- zeolite in a weight percent between 60 % and 90 %
- lime in a weight percent from 10% to 40%,
- optionally a binder could partially replace zeolite in a weight percent less than 50 % with respect to the content of zeolite; this binder is preferably selected from a SCM, an OPC and any combination thereof, more preferably the SCM binder is selected from volcanic ash, fly ash, granulated blast furnace slag, silica, metakaolin and any combination thereof,
wherein the sum of the zeolite, the lime and the binder is 100% by weight,
being the composite a thermoelectric material.

Said thermoelectric material exhibits interesting thermoelectric properties for energy harvesting applications.

The invention also refers to grouts, mortars or concretes comprising the cementitious composite previously defined.

The invention also refers to a cementitious structure comprising the cementitious composite previously defined or the mortar or concrete previously defined.

The cementitious structure can be selected among tiles, roofs, panels, facades, pavements and concrete cobblestones
The invention also refers to a process to obtain the cementitious composite defined above.

The advantages of said cementitious composite are
- can be applied as a mortar for building proposes
- can produce large voltages with low temperature gradients.

In a preferred embodiment, the thermoelectric material is a photothermoelectric material with radiative cooling properties.

The invention also refers to the use of the cementitious composite defined above as a cool mortar, capable of saving substantial building cooling energy. A cool mortar is defined as a material with a Solar Reflectance Index (SRI) value higher than ~80 (ASHRAE. Advanced Energy Design Guide for Small to Medium Office Buildings: Achieving 50% Energy Savings toward a Net Zero Energy Building (American Society of Heating, Refrigerating and Air-Conditioning Engineers, 2011)).

Similarly a cool mortar or a cool concrete is defined as a mortar or concrete with a Solar Reflectance Index (SRI) value higher than ~80.

The invention also refers to the use of the cementitious composite defined above, the mortar or the concrete comprising the cementitious composite defined above, for energy harvesting.

The advantages of said cementitious composite are:
- it largely reflects most of the Sun irradiance (R_{Sun}>0.95)
- it can be applied as a cool mortar, capable of saving substantial building cooling energy.

The invention also refers to the use of the cementitious structure for energy harvesting. A particular use refers to its use for saving energy in buildings because the need of using air conditioning can be largely reduced.

### BRIEF DESCRIPTION OF THE DRAWINGS

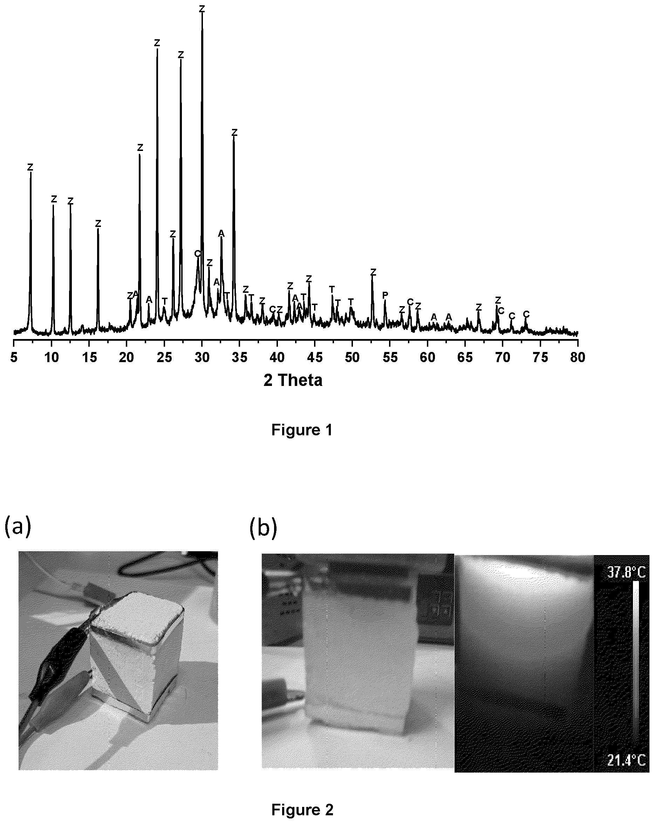

**Figure 1****.** XRD pattern of the sample of Example 1 after 28 days. Z= Zeolite, A = Alite (C3S), C = Calcite, T=Tobermorite.
**Figure 2****:** (a). Experimental set up for measuring the Seebeck Voltage at different temperatures. (b) Infrared Temperature measurement after heating one side of the sample. A temperature difference of ~16 °C was noticed.
**Figure 3****:** Seebeck Voltage as a function of time for Example 1' sample for a temperature and a temperature gradient of 16°C.
**Figure 4****.** Solar reflectance of the sample of Example 1.

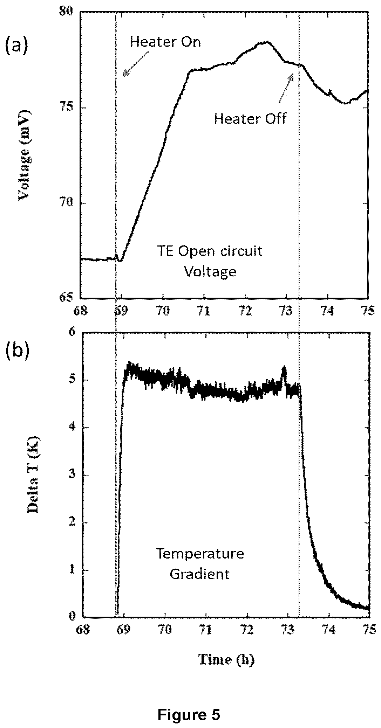

**Figure 5** (a) Seebeck voltage differences and (b) temperature differences for Example 2 sample.

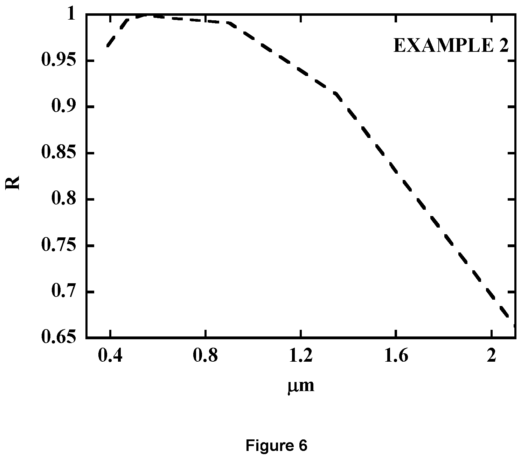

**Figure 6****:** Solar reflectance of the sample of Example 2.

### EXAMPLES

### EXAMPLE 1: Slaked lime design with C3S addition

Example 1 illustrates a mixture of Zeolites with slaked lime and OPC (C3S).

### Preparation:

For the preparation of a 345 g of the Example 1's sample, a saturated solution of portlandite was initially prepared, allowing it to rest for 24 hours before mixing with the zeolite (Z4A zeolite, reagent grade from IQE). The solution was then filtered using filter paper and added to a plastic beaker containing the zeolite, maintaining a lime/zeolite (L/Z) ratio of 0.6. The mixture was stirred with a mixer at 350 rpm for 5 minutes. After 24 hours, a white liquid/solid phase separation was observed. The white solid was then crushed with a spatula, and the mixture was re-agitated using a vortex mixer. When a uniform white solution, free of solid lumps, was obtained, it was transferred to a glass jar for cement mixing. At this point, C3S (98% pure laboratory reagent supplied by Bond Chemicals. The size of the powers is below 40µm, being D50<10µm.) was added at 25 % by weight of the zeolite, along with water to achieve a water/cement ratio of 0.4. The total L/S ratio was approximately 0.55.

The mixture was then stirred at 750 rpm for 1 minute and 30 seconds, allowed to rest for one minute, and then stirred again at 750 rpm for another 1 minute and 30 seconds. Finally, the mixture was poured into molds. After 24 hours, the sample was removed from the mold and sealed in a plastic bag, where it was cured for 28 days.

### Sample structure

The XRD pattern of the sample after 28 days of curing is shown in Figure 1. The pattern reflects that the structure is mainly composed of undegraded Zeolites (Z), though the presence of Tobermorite (T) shows that pozzolanic reactions also took place. Besides, unreacted C3S (A) and calcite (C) crystals are also observed.

### Properties:

The above zeolite-Tobermorite structure has good thermoelectric properties. To proof that it is so, we have measured the Seebeck coefficient. To this end, an open-circuit voltage of the so prepared sample was measured as a function of time to evaluate their Seebeck behavior. A homemade experimental setup for Seebeck measurements is shown in Fig. 2 (a). Both sides of cylindrical samples with a diameter of 40 mm and a height of 20 mm were polished with sandpaper up to 400 meshes and covered with copper adhesive. Silver paste and a thin copper adhesive were used at a distance of 4 mm from each hot and cold side to record the TE voltages of the samples. Different temperatures were applied using a small ceramic heating plate at the top end of the samples. The temperature of each side of the wire connection was measured using a p-type thermocouple connected to a Picolog datalogger. In this experiment the temperature of the cold side was 21 °C and the difference of temperature between the hot and cold side was 16.4 °C (see Figure 2b). A KEITHLEY 2100 6 ½ DIGIT Multimeter connected to LabVIEW software was used to monitor the voltage difference between the two copper connections. The results can be seen in Figure 3.

The sample quickly reached voltages above 25 mV that remain stable provided the temperature gradient is maintained. Keeping in mind that the temperature difference was 16°C, it is clear that the obtained Seebeck coefficient of the cementitious cement paste is ~1200 µV/K. Note that this number corresponds to the intrinsic value of the cementitious matrix (i.e. the cement paste), and therefore, largely exceeds any other value of the state of the art. Indeed, it is in the range of the best cementitious composites discussed above - cementitious composite of example 1 - , but obtained without any external addition or aggregate.

Another key property of Example 1's sample is its good solar reflectance. Figure 4 shows the solar reflectance in the range of 0.25 µm-2.5 µm as measured with an UV-vis-NIR spectrometer (410- SOLAR). As can be seen, the average vale in the solar domain (Rₛᵤₙ) reaches a value of Rₛᵤₙ=0.95. This value clearly exceeds any vale proposed in the state of the art for cement-based materials, as shown in Table 1.

**Table 1.**

| Solar Reflectance (Rsun) | Reference |
|---|---|
| 0.82 | Guo Lu et al. Cement and Concrete Composites 119 (2021) 104004 |
| 0.91 | D. Lie et al. Journal of Building Engineering 85 (2024) 108749 |
| 0.84 | D. Liu et al. Energy & Building Materials 285 (2023) 112909 |
| 0.95 | Example 1 of this invention |
| 0.97 | Example 2 of this invention |

### Example 2: Hot-mixing design of a cement paste made with Zeolites and CaO.

In example 2, our Roman-inspired modern concrete will follow a hot-mixing process according to L. M. Seymour et al. Hot mixing: Mechanistic insighths into durability of ancient Roman Concrete; Science Advances 9 eadd 1602 (2023).

To this end we have prepared a sample by mixing Z4A zeolite (reagent grade from IQE) and calcium oxide (CaO) (reagent grade with 99 % purity bought to Sigma- Aldrich (Germany) ) at a ratio of 2.5:1. For 100 grams of zeolite, we mix it with 40 grams of CaO. After thorough mixing, water is added at a liquid-to-solid (L/S) ratio of 0.5. This ensures proper hydration. The fresh resulting paste was poured in cylindrical molds (ø=46 mm) and cured at ambient temperature and covered with a plastic film.

Following the same protocol as employed in Example 1, we have determined the Seebeck voltage of the sample. In Figure 5a and Figure 5b, the Seebeck voltage differences and temperature differences between both sides of the sample can be found. It is worth noting that the small temperature difference of 5°C was able to trigger voltage differences about 11 mV. This means a Seebeck coefficient about ~ DV/DT (11 mV/5K) = 2300 µV/K. This value clearly improves most of the thermoelectric cementitious composites.

As happened with the Example1, the sample of this Example 2 also exhibits an extremely high reflectance of the solar radiation. See Figure 6 and Table 1. Indeed, the average value of the solar reflectance (Rₛᵤₙ=0.97) is on par or better than the best radiative coolers of the state of the art (see for instance J. Mandal et al. Joule 4, (2020) 1350-1356).

## Claims

1. A cementitious composite **characterized in that** it exhibits thermoelectricity and radiative cooling properties, such that the Seebeck coefficient is >2000 µV/K and the solar reflectance is above 0.95, both values included.

2. The cementitious composite according to claim 1, comprising zeolite.

3. The cementitious composite according to claim 2, wherein the zeolite is selected among Z4A, ZSM.5, MCM-21, MCM-22 and mixtures of them.

4. The cementitious composite according to claim 2, comprising zeolite in a weight percent between 60 % and 90 % with regard to the total composite weight, these values are included.

5. The cementitious composite according to any one of the preceding claims, comprising lime.

6. The cementitious composite according to claim 5, wherein the lime is selected from slaked lime, quicklime and a combination thereof.

7. The cementitious composite according to claim 5, comprising lime in a weight percent between 10% and 40%, with regard to the total composite weight, this value included.

8. The cementitious composite according to according to any one of the preceding claims, comprising a binder.

9. The cementitious composite according to claim 8 comprising binder in a percent above 0% and below 25 % with regard to the total composite weight, the value 25% included.

10. The cementitious composite according to claim 1, that comprises a zeolite-based lime mortar and a binder selected between SCM and OPCs.

11. The cementitious composite according to any of the preceding claims 1 to 10, comprising
- zeolite in a weight percent between 60 % and 90 %
- lime in a weight percent from 10% to 40%,
- optionally a binder in a weight percent less than 25 %, preferably selected from a SCM, an OPC and any combination thereof, more preferably the SCM binder is selected from volcanic ash, fly ash, granulated blast furnace slag, silica, metakaolin and any combination thereof
wherein the sum of the zeolite, the lime and the binder is 100% by weight,
being the composite a thermoelectric material.

12. A mortar, grout or concrete comprising the cementitious composite defined in any one of the preceding claims.

13. A cementitious structure comprising the cementitious composite defined in any one of the preceding claims 1 to 11, or the mortar or concrete defined in claim 12.

14. A cementitious structure according to the preceding claim, which is selected among tiles, roofs, panels, facades, pavements and concrete cobblestones.

15. Use of the cementitious composite defined in any of claims 1 to 11 as a cool mortar, capable of saving substantial building cooling energy.

16. Use of the cementitious structure defined in any of claims 13 to 14 for energy harvesting.
